# EUROPEAN PATENT APPLICATION

(11) **EP 1 818 767 A1**
(43) Date of publication of application: **15.08.2007**
(21) Application number: 06101605.1
(22) Date of filing: 13.02.2006
(51) Int. Cl.: G06F 3/033

(54) **Data input device with encoding of activation direction**

(71) Applicant: IEE INTERNATIONAL ELECTRONICS & ENGINEERING S.A., 6468 Echternach (LU)
(72) Inventor: Serban, Bogdan, 3376, Leudelange (LU); Boyer, Philippe, 57570, Cattenom (FR); Bar, Johann, 57480, Haute-Sierck (FR)
(74) Representative: Beissel, Jean

(57) **Abstract**

A data input device (10) comprises a first electrode structure comprising a first collector electrode (22) and a first plurality of finger electrodes (24) extending from said first collector electrode (22) and a second electrode structure comprising a second collector electrode (26) and a second plurality of finger electrodes (28) extending from said second collector electrode (26), said first and second electrode structures being arranged on a first carrier layer (12) in such a way, that in an active area (20) of said data input device (10), said first plurality of finger electrodes (24) extend between said second plurality (28) in an interdigitating arrangement. The device (10) further comprises at least one shunting element (30) arranged in said active area (20) of said data input device (10) on a second carrier layer (14) in facing relationship to said interdigitating arrangement of said first (24) and second (28) plurality of finger electrodes such that, if said first (12) and second (14) carrier layers are pressed together in response to a force acting on the data input device (10), said at least one shunting element (30) establishes an electrical contact between respective adjacent finger electrodes of said first (24) and said second (28) plurality of finger electrodes. According to the invention at least one of said first electrode structure, second electrode structure or shunting element (30) comprises at least one series of resistive patches (38) having different electrical resistances, said resistive patches (38) of said at least one series being arranged along said active area (20) in an order of increasing electrical resistance in such a way that the electrical resistance between respective terminals (40,42) of the first electrode structure and the second electrode structure varies monotonically if an activation of the input device propagates monotonically along said series of resistive patches (38).

## Description

### Introduction

The present invention generally relates to an input device for inputting data into an electronic device e.g. for the use in telecom, consumer electronics, white goods or automotive markets. The present invention more specifically relates to a data input device with encoding of activation direction, such as a cursor control device, a direction encoder or a touchpad.

There is an increasing market demand for low cost input devices, such as scrollers, joysticks or touchpads. Actual solutions usually make use of several acquisition channels, digital or analogue, when detection of operator activation direction (scrolling direction) is required. Such devices thus require the use of a complex pulse electronics in order to determine the direction of activation of the input device. Furthermore, the use of several multiplexed acquisition channels implies a relative high number of connections for the input device, which increases the overall complexity and costs for the driver electronics and the connection with the input device.

### Object of the invention

The object of the present invention is to provide a data input device with activation direction encoding, which allows cost cutting and the use of less complex electronics.

### General description of the invention

In order to overcome the abovementioned problems, the present invention relates to a data input device comprising a first electrode structure comprising a first collector electrode and a first plurality of finger electrodes extending from said first collector electrode and a second electrode structure comprising a second collector electrode and a second plurality of finger electrodes extending from said second collector electrode, said first and second electrode structures being arranged on a first carrier layer in such a way, that in an active area of said data input device, said first plurality of finger electrodes extend between said second plurality in an interdigitating arrangement. The device further comprises at least one shunting element arranged in said active area of said data input device on a second carrier layer in facing relationship to said interdigitating arrangement of said first and second plurality of finger electrodes such that, if said first and second carrier layers are pressed together in response to a force acting on the data input device, said at least one shunting element establishes an electrical contact between respective adjacent finger electrodes of said first and said second plurality of finger electrodes. According to the invention at least one of said first electrode structure, second electrode structure or shunting element comprises at least one series of resistive patches having different electrical resistances, said resistive patches of said at least one series being arranged along said active area in an order of monotonically varying electrical resistance (i.e. in an order of increasing or decreasing electrical resistance) in such a way that, if an activation of the input device propagates monotonically along said resistive patches of said at least one series of resistive patches, the electrical resistance between respective terminals of the first electrode structure and the second electrode structure varies in a predetermined and characteristic manner depending on the direction of the propagation of the activation.

The present invention thus proposes a touchpad like input device, in which the information about the activation direction is passively encoded by means of a series of resistive patches in the circuit of the electrode structures. The information about the movement of an activation point along the active area is simply obtained by a dynamic resistance measurement at the output terminals of the input device. In contrast to the known prior art devices, no complex pulse evaluation circuit is necessary in order to obtain the required direction information.

It should be noted that the arrangement and configuration of the resistive patches may e.g. be such that, if an activation of the input device propagates monotonically along said series of resistive patches, the electrical resistance between respective terminals varies monotonically with the propagation, or that the graph of the electrical resistance between respective terminals versus time (or propagation) shows a series of peaks with monotonically varying amplitudes.

In a preferred embodiment, the data input device comprises a plurality of series of resistive patches, wherein said plurality of series of resistive patches are arranged one behind the other along the active area in such a way that the electrical resistance between respective terminals of the first electrode structure and the second electrode structure varies substantially in an asymmetric saw-tooth like manner if a constant local activation of the input device propagates monotonically along said plurality of series of resistive patches. This embodiment enables a detection of the activation direction over a large active area with a limited range of different resistance values in each series of resistive patches.

It should be noted that the individual teeth of the saw-tooth like structure should be asymmetric with respect to their maximum so that the two opposing directions of activation are distinguishable. It will further be understood by the skilled person, that the expression "substantially saw-tooth like" shape of the resistance versus time (or propagation) graph is not limited to a graph in which the rising and/or descending edge of individual teeth is formed by a single straight line. In fact, while it might be possible to configure and arrange the resistive patches in such a way that the individual teeth are formed by continuous and straight or smoothly curved lines, more common configurations will result in a resistance graph in which the individual edges of the overall saw-tooth structure may contain discontinuities and/or kinks. What is important in order to be able to detect the activation direction is that the graph has an asymmetric saw-tooth like shape when taken as a whole.

It will finally be noted that in a preferred embodiment of the invention, two or more series of resistive patches may have individual configurations so as to be mutually distinguishable. This may be achieved by the different series being composed of different combinations of resistive patches or by a different arrangement of the individual resistive patches inside the series (e.g. distance between adjacent resistive patches). Such an embodiment with individually different series of resistive patches results in a resistance graph with overall saw-tooth like shape, in which the individual teeth of the saw-tooth like structure have different shapes. Such an embodiment thus allows detecting (by the behaviour of the resistance variation) across which one of the individual series of resistive patches the activation currently propagates. Besides the detection of the activation direction, such a data input device also enables a rough detection of the position of the propagating activation.

In one variant of the input device, the shunting element comprises said at least one series of resistive patches and wherein said electrical contact established between adjacent finger electrodes is established via said patches of resistive material. In another variant, said first electrode structure comprises said at least one series of resistive patches and wherein at least a part of the finger electrodes of said first electrode structure are connected via one of said resistive patches to said collector electrode of said of said first electrode structure.

In order to provide resistive patches with different electrical resistances, it is possible to use different resistive materials for the patches. In a more preferred embodiment however, said resistive patches of said at least one series of resistive patches are made of the same resistive material and the resistive patches have different dimensions, i.e. the different electrical resistances of the individual resistive patches is obtained suitably dimensioning said resistive patches.

In a possible embodiment of the invention, one of said first or second collector electrode comprises a strip of resistive material connected between terminals of said second collector electrode and wherein at least a part of said finger electrodes of the respective plurality of finger electrodes extend from said strip of resistive material. Such an input device may operate in a direction parallel to the resistive strip as a linear potentiometer, enabling to determine the position of an activation point in this direction.

It should be noted, that the input device according to the present invention may be manufactured in a wide range of different shapes. For instance, for a rectilinear scrolling pad said first and second electrode structures preferably have an elongated rectilinear form, such that said active area of the input device has a corresponding rectilinear form. If however an input device with a circular active area is needed, the first and second electrode structures are in the form of matching ring segments.

In a preferred embodiment of the invention, the resistive material is a pressure sensitive material, such that the electrical resistance of the electrical contact established between adjacent finger electrodes is depending on the pressure acting on the input device. Such an input device not only enables to detect the direction of the movement of an activation point but also of the activation force. It should be noted, that the resistances of the resistive patches should be chosen so as to be significantly different from the pressure dependent resistance caused by the pressure sensitive material. In this case the response function of such a pressure sensitive scrolling device, which comprises a combination of the different resistance values, may be easily analyzed and the individual resistance values extracted. If e.g. the resistance values are significantly smaller than the pressure dependent resistance, the response function generally shows a graph corresponding to the response function of the pressure sensitive resistance which is modulated by the generally saw-tooth like response of a plurality of series of resistive patches.

It should be noted, that the data input device according to the present invention is preferably configured as a foil-type switching element, in which said first and second carrier layers comprise elastic carrier foils and are arranged at a certain distance by means of a spacer layer, said spacer layer comprising at least one cut-out in the region of an active area of the data input device. The skilled person will appreciate, that the turn-on threshold of such a sensor, i.e. the minimum force which is required for establishing the contact between the electrode structures and the shunting element, may be easily adapted by suitably configuring the elastic properties of the carrier foils, the thickness of the spacer layer and/or the dimension of the cut-out of the spacer layer.

### Detailed description with respect to the figures

The present invention will be more apparent from the following description of several not limiting embodiments with reference to the attached drawings, wherein
- Fig.1:: shows a cross section of a foil-type input device;
- Fig.2:: shows a top view of the shunting element and the electrode structures of a first embodiment of an elongated rectilinear input device;
- Fig.3:: shows a top view of the electrode structures of a second embodiment of an elongated rectilinear input device;
- Fig.4:: shows a general shape of a response function of an input device as shown in Fig. 2 or 3;
- Fig.5:: shows a top view of the shunting element and the electrode structures of an embodiment of an annular input device;
- Fig.6:: shows a top view of the shunting element and the electrode structures of an embodiment of an elongated input device with position detection along one axis;
- Fig.7:: shows a top view of the shunting element and the electrode structures of an embodiment of an annular input device with position detection;
- Fig.8:: shows a general shape of the response function of an input device wherein the resistive patches are made of a pressure sensitive material;
- Fig.9:: shows a general shape of the response function of an input device wherein the series of resistive patches are mutually different.

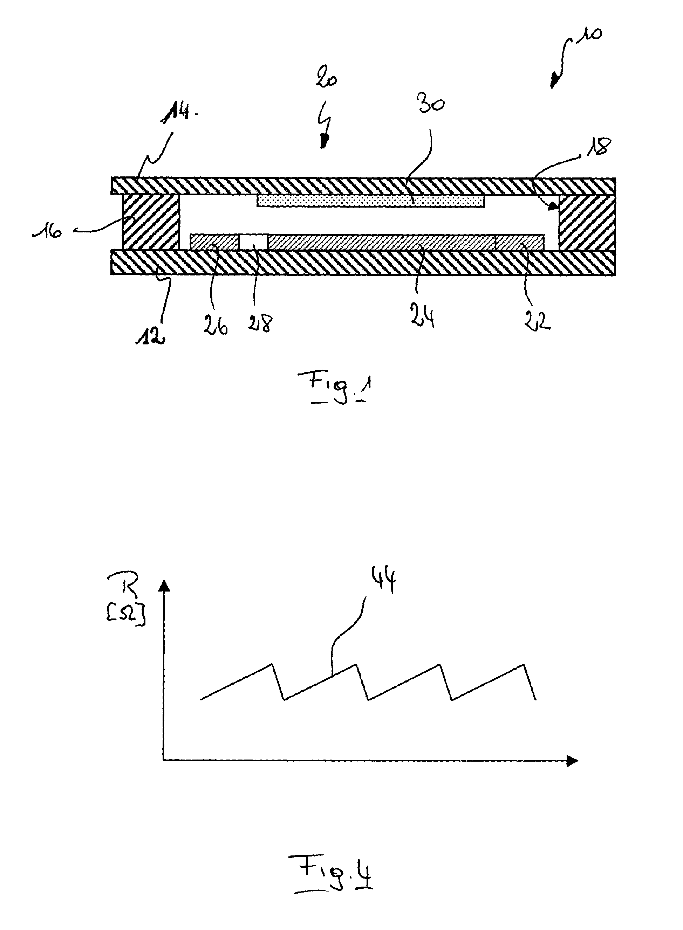

Fig. 1 generally shows a cross section of a foil-type input device 10. The input device comprises a first and a second carrier layer 12 and 14, which are arranged at a certain distance by means of a spacer layer 16. Spacer layer 16 comprises at least one cut-out 18 in the region of the active area 20 of the input device 10.

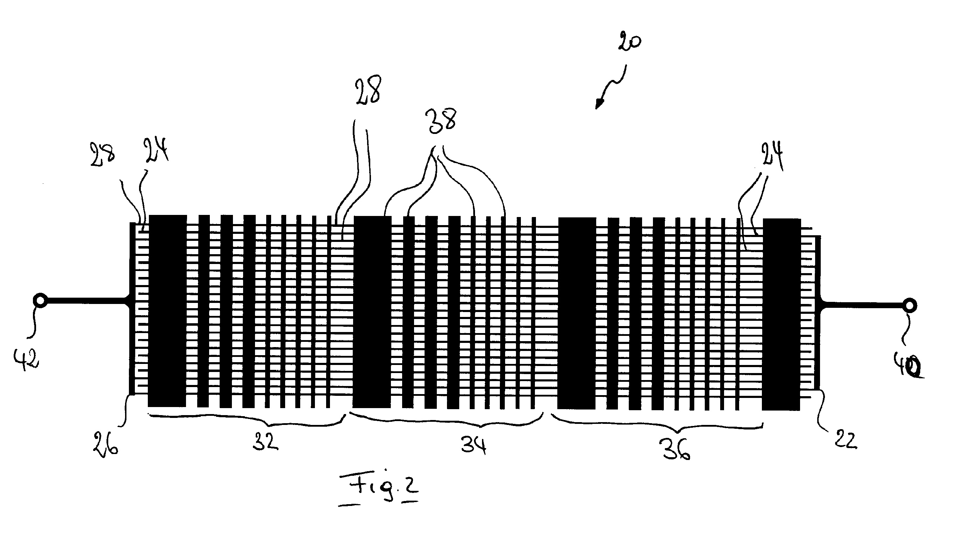

In the active area 20, a first electrode structure comprising a first collector electrode 22 and a first plurality of finger electrodes 24 extending from said first collector electrode 22 and a second electrode structure comprising a second collector electrode 26 and a second plurality of finger electrodes 28 extending from said second collector electrode 26 are applied on the inner surface of the first carrier foil 12. The arrangement of the electrodes structures is such that in the active area 20 of the data input device10, the first plurality of finger electrodes 24 extend in an interdigitating arrangement between said second plurality of finger electrodes 28 (see also Fig. 2).

At least one shunting element 30 is arranged in said active area 20 on the inner surface of the second carrier foil 14 in facing relationship to said interdigitating arrangement of said first and second plurality of finger electrodes 24, 28 such that, if said first and second carrier layers are pressed together in response to a force acting on the data input device, said at least one shunting element 30 establishes an electrical contact between respective adjacent finger electrodes 24 and 28.

Fig. 2 shows a top view of the shunting element and the electrode structures of a first embodiment of an elongated rectilinear input device. In this embodiment the shunting element comprises three series 32, 34 and 36 of resistive patches 38, are arranged one behind the other along the active area 20. The resistive patches 38 of one series are arranged along said active area 20 in an order of increasing electrical resistance. In the shown embodiment, each resistive patch comprises a strip of resistive material, which is applied to the inner surface of the second carrier foil 14 (see fig. 1), so as to extend normally to the interdigitating fingers 24 and 28 of the electrode structures.

It should be noted, that in order to illustrate the relative arrangement of the electrical elements of the input sensor, Fig. 2 represents a top view on the shunting element and the electrode structures without the carrier foils. The skilled person will however appreciate, that in the input device, the shunting element and the electrode structures lie in different planes, which are defined e.g. by the two carrier foils.

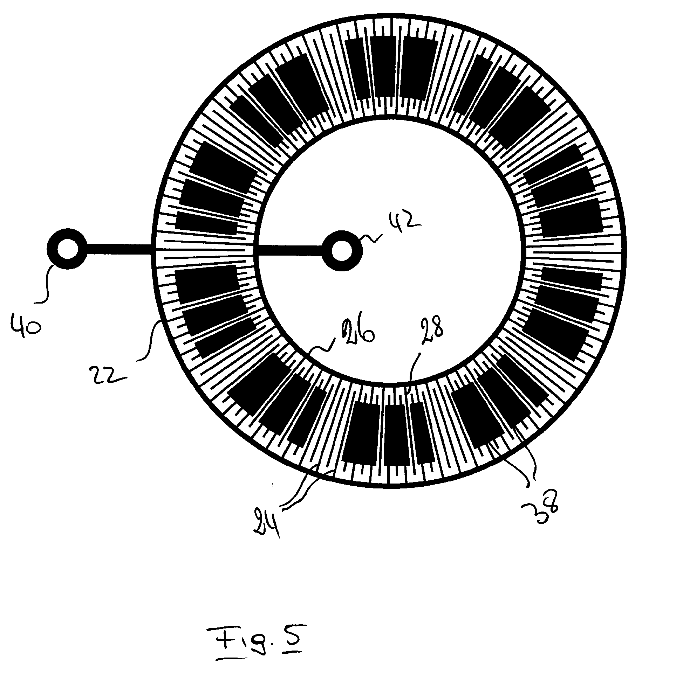

If the carrier foils 12 and 14 (see fig. 1) are pressed together in response to a force acting locally on the input device, the resistive patches 38 in the vicinity of the activation location are pressed against the underlying fingers and an electrical contact is established via the resistive patches or strips between the adjacent fingers 24 and 28 in this region. The electrical resistance of this electrical contact is depending on the contact resistance between the fingers and the resistive strips and the internal resistance of the resistive strip. It follows that the electrical resistance at the terminals 40 and 42 of the electrode structures depends on the location of the activation with respect to the different patches 38 of a series and that the electrical resistance between respective terminals of the first electrode structure and the second electrode structure varies in a generally saw-tooth like manner if a constant local activation of the input device propagates monotonically along said plurality of series of resistive patches. Such a general shape of a response function 44 is generally illustrated in Fig. 4.

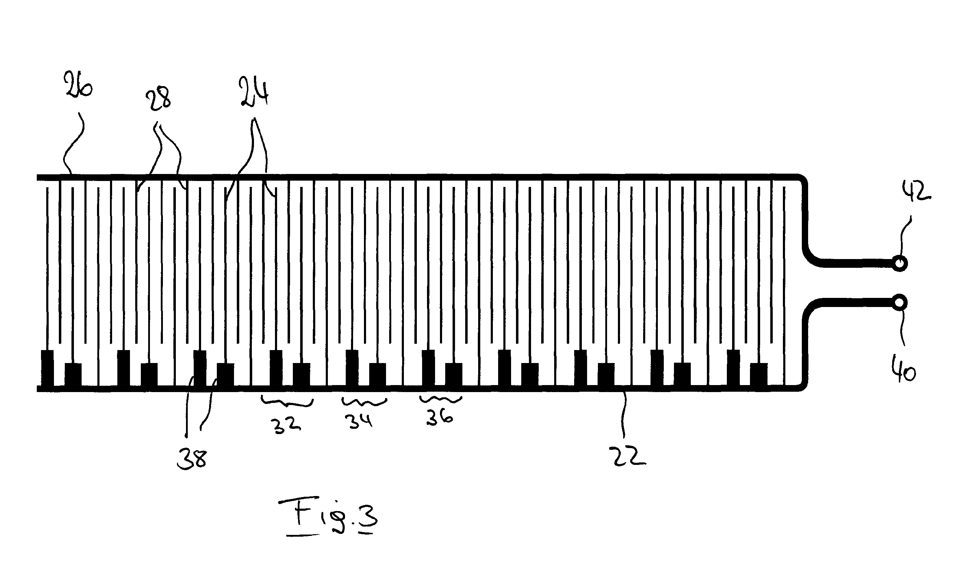

Fig. 3 shows a top view of the electrode structures of a second embodiment of an elongated rectilinear input device. In this embodiment, the first electrode structure comprises a plurality of series of resistive patches having different electrical resistances, which are arranged such that a part of the finger electrodes 24 of said first electrode structure are connected via one of said resistive patches 38 to the collector electrode 22 of the first electrode structure. As with the previously described embodiment, the resistive patches 38 of each series are arranged along said active area in an order of increasing electrical resistance in such a way that the electrical resistance between respective terminals 40 and 42 of the first electrode structure and the second electrode structure varies in a predetermined and characteristic manner (e.g. monotonically) depending on the direction of the propagation of the activation. if an activation of the input device propagates monotonically along said series of resistive patches.

The shunting element 30 of such an input device does not need to be composed of a number of individual shunting patches but may comprise a simple conductive or resistive layer applied on the second carrier foil 14 and extending substantially over the entire active area.

Fig. 5 shows an embodiment of a direction encoder with an annular active area. The configuration of this input device is generally similar to the configuration of the input device shown in Fig. 2, except that the electrode structures (22, 24) and (26, 28) are formed as matching annular structures. It will be appreciated, that the rectilinear and annular embodiments described herein only constitute non limiting examples of input device configurations and that by suitably shaping the electrode structures and shunting element, any desired configuration may be achieved.

It should be noted that simple direction encoders as described hereinabove with reference to figures 2, 3 or 5 only require two terminals to be connected to an associated electronics. In contrast to this, all prior art direction encoders require at least three connections. It will further be appreciated that for all these embodiments, the shunting element may comprise a pressure sensitive material instead of a simple resistive material, such that the electrical resistance of the electrical contact established between adjacent finger electrodes is depending on the pressure acting on the input device. Such an input device not only enables to detect the direction of the movement of an activation point but also of the activation force, and this without increase of the required connections.

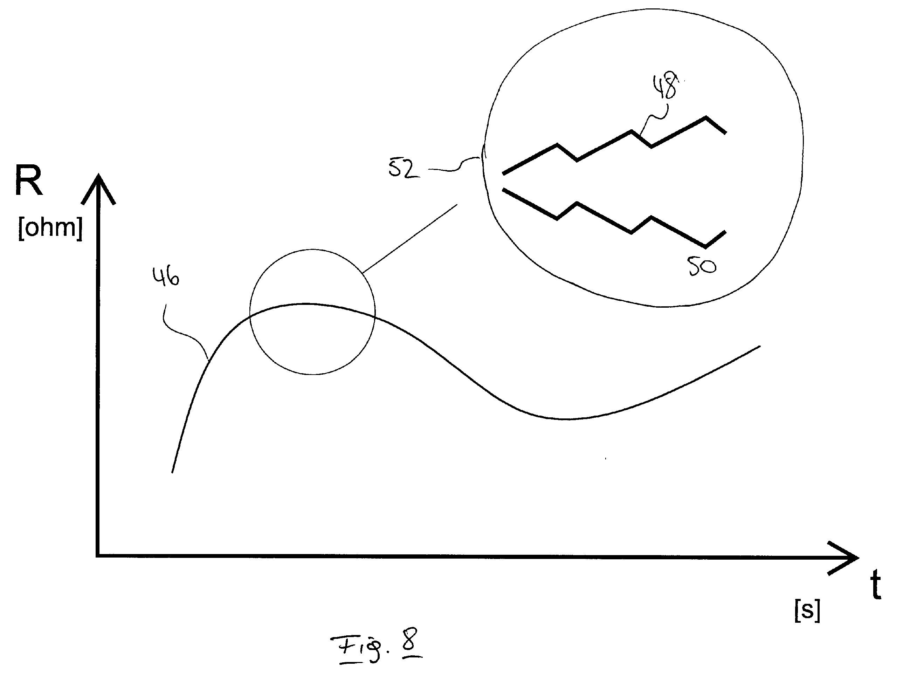

It should be noted, that the resistances of the resistive patches should be chosen so as to be significantly different from the pressure dependent resistance caused by the pressure sensitive material. In this case the response function of such a pressure sensitive scrolling device, which comprises a combination of the different resistance values, may be easily analyzed and the individual resistance values extracted. If e.g. the resistance values are significantly smaller than the pressure dependent resistance, the response function generally shows a graph corresponding to the response function 46 of the pressure sensitive resistance, which is modulated by the saw-tooth like response 48, 50 of a plurality of series of resistive patches. Such a response function of a moving activation with varying strength is schematically represented in Fig. 8 as a function of time. As is schematically illustrated in the magnification section 52, the response function 46 of the pressure sensitive resistance is modulated with a saw-tooth like pattern 48 or 50 depending on the direction of the movement of the activation point.

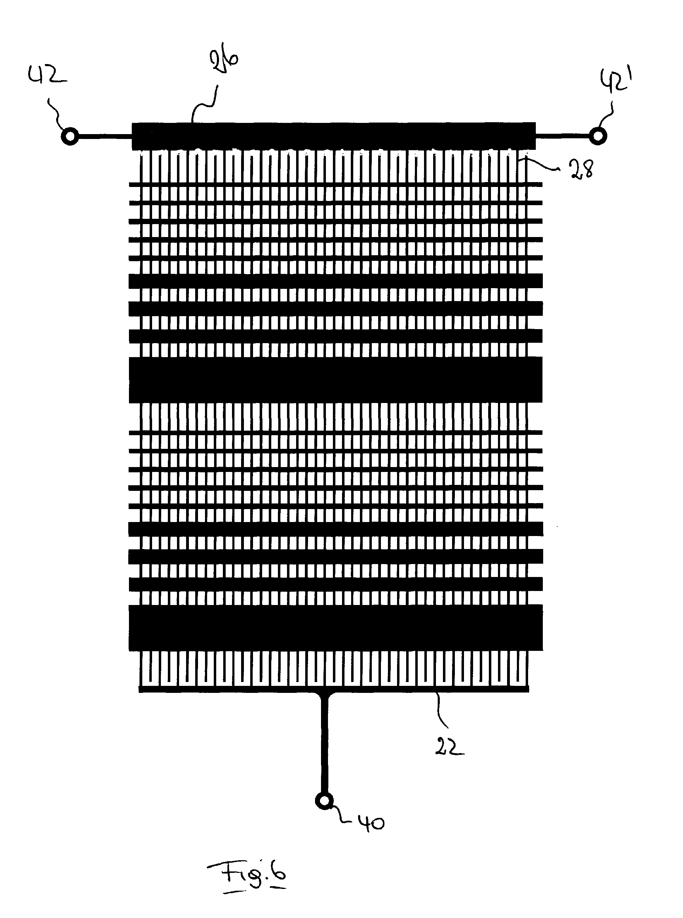

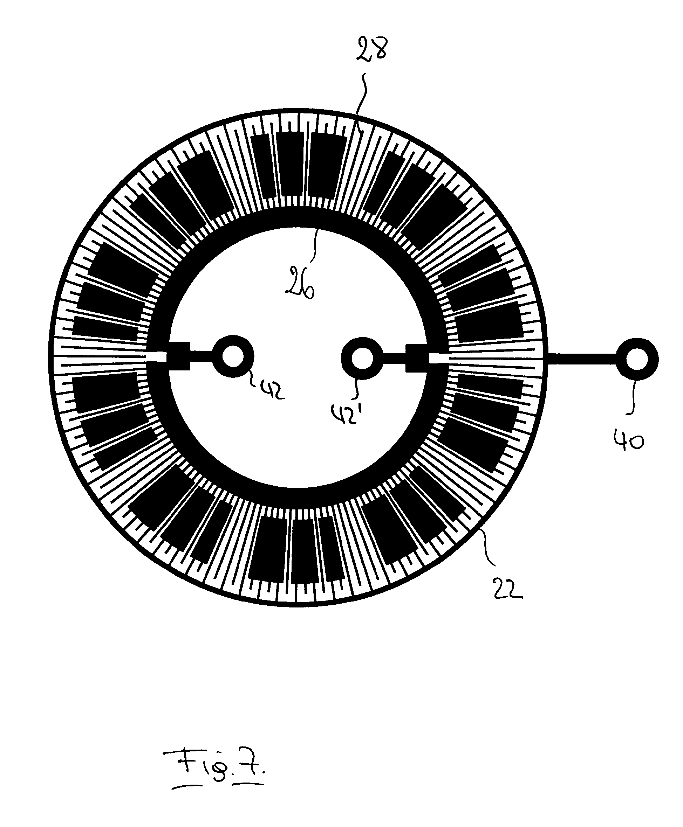

Figs. 6 and 7 show embodiments of input devices, in which one of said first or second collector electrode, e.g. collector electrode 26, comprises at least one strip of resistive material connected between terminals 42 and 42' of the second collector electrode 26. In this case, the finger electrodes 28 of the respective plurality of finger electrodes extend from said strip of resistive material 26. Such an input device may operate in a direction parallel to the resistive strip as a linear potentiometer, enabling to determine the position of an activation point in this direction. In fact, if a voltage difference is applied to the terminals 42 and 42' of collector electrode 26 the output voltage at terminal 40 of collector electrode 22 depends on the position of the activation point with respect to the resistive strip. The input device thus forms some sort of voltage divider or linear potentiometer, wherein the voltage read on the terminal 40 depends on the location, at which the first and second electrode structures are brought into contact by means of the shunting element 30.

It follows, that the input devices of Figs. 6 and 7 not only allow to determine the movement direction of an activation point but also to localize the activation point in a direction along the second collector electrode 26. These input devices thus constitute touchpad devices, which only require three terminals to be connected to an associated electronics. In contrast to this, all prior art touchpad devices require at least four connections.

It will further be appreciated that as for the direction encoders presented above, the shunting element may comprise a pressure sensitive material instead of a simple resistive material, such that the electrical resistance of the electrical contact established between adjacent finger electrodes is depending on the pressure acting on the input device.

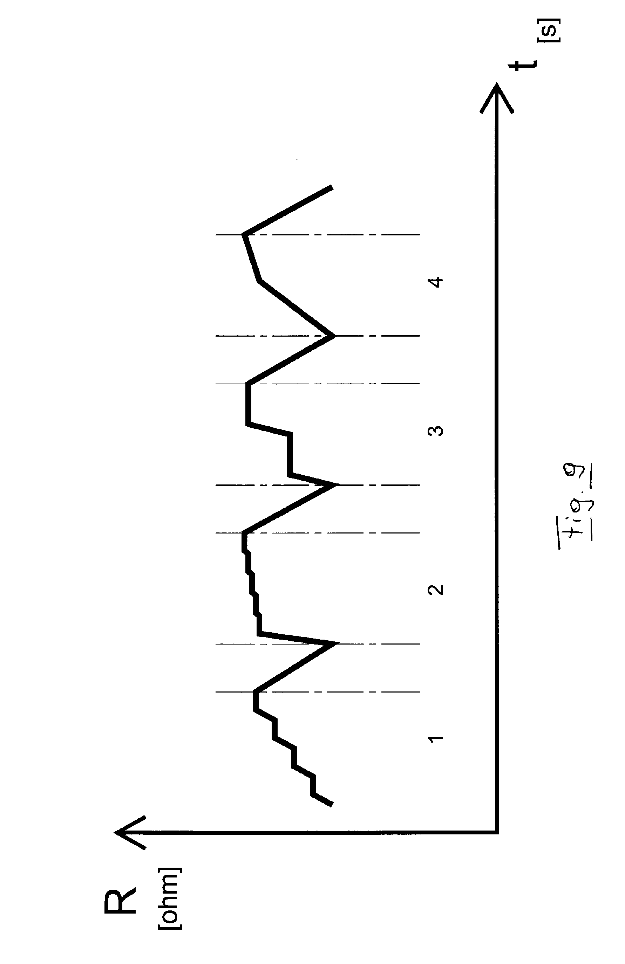

Finally, the skilled person will understand, that in a possible embodiment of the input device, two or more series of resistive patches may have individual configurations so as to be mutually distinguishable. This may be achieved by the different series being composed of different combinations of resistive patches or by a different arrangement of the individual resistive patches inside the series (e.g. distance between adjacent resistive patches). Such an embodiment with individually different series of resistive patches results in a resistance graph with overall saw-tooth like shape, in which the individual teeth of the saw-tooth like structure have different shapes. Such a shape of a response function is generally illustrated in Fig. 9. Such an embodiment of the input device thus allows detecting (by the behaviour of the resistance variation) across which one of the individual series of resistive patches the activation currently propagates and thus also enables a detection of the position of the propagating activation.

If this embodiment is combined with an input device as shown in Fig. 6, it is possible to configure an input device, which enables position detection along two different axes. In other words, by suitably configuring the different series of resistive patches of the device shown in Fig. 6, it is possible to provide an x-y touchpad having only three terminals.

### List of reference numerals

- 10: foil-type input device
- 12, 14: first and second carrier layer
- 16: spacer layer
- 18: cut-out
- 20: active area
- 22: first collector electrode
- 24,28: finger electrodes
- 26: second collector electrode
- 30: shunting element
- 32, 34, 36: series of resistive patches
- 38: resistive patches
- 40, 42, 42': terminals
- 44,46: response functions
- 48, 50: saw-tooth like pattern
- 52: magnification section

## Claims

1. Data input device comprising,
a first electrode structure comprising a first collector electrode and a first plurality of finger electrodes extending from said first collector electrode and a second electrode structure comprising a second collector electrode and a second plurality of finger electrodes extending from said second collector electrode, said first and second electrode structures being arranged on a first carrier layer in such a way, that in an active area of said data input device, said first plurality of finger electrodes extend between said second plurality in an interdigitating arrangement
and at least one shunting element arranged in said active area of said data input device on a second carrier layer in facing relationship to said interdigitating arrangement of said first and second plurality of finger electrodes such that, if said first and second carrier layers are pressed together in response to a force acting on the data input device, said at least one shunting element establishes an electrical contact between respective adjacent finger electrodes of said first and said second plurality of finger electrodes;
**characterised in that** at least one of said first electrode structure, second electrode structure or shunting element comprises at least one series of resistive patches having different electrical resistances, said resistive patches of said at least one series being arranged along said active area in an order of monotonically varying electrical resistance in such a way that, if an activation of the input device propagates monotonically along said series of resistive patches, the electrical resistance between respective terminals of the first electrode structure and the second electrode structure varies in a characteristic manner depending on the direction of the propagation of the activation.

2. Data input device according to claim 1, comprising a plurality of series of resistive patches, wherein said plurality of series of resistive patches are arranged one behind the other along the active area in such a way that the electrical resistance between respective terminals of the first electrode structure and the second electrode structure varies substantially in an asymmetric saw-tooth like manner if a constant local activation of the input device propagates monotonically along said plurality of series of resistive patches.

3. Input device according to claim 2, wherein at least two of said plurality of series of resistive patches have individual configurations so as to be mutually distinguishable, such that individual teeth of the saw-tooth like resistance graph have different shapes.

4. Input device according to any one of claims 1 to 3, wherein said shunting element comprises said at least one series of resistive patches and wherein said electrical contact established between adjacent finger electrodes is established via said patches of resistive material.

5. Input device according to any one of claims 1 to 4, wherein said first electrode structure comprises said at least one series of resistive patches and wherein at least a part of the finger electrodes of said first electrode structure are connected via one of said resistive patches to said collector electrode of said of said first electrode structure.

6. Input device according to any one of claims 1 to 5, wherein said resistive patches of said at least one series of resistive patches are made of the same resistive material and wherein the resistive patches have different dimensions.

7. Input device according to any one of claims 1 to 6, wherein one of said first or second collector electrode comprises a strip of resistive material connected between terminals of said second collector electrode and wherein at least a part of said finger electrodes of the respective plurality of finger electrodes extend from said strip of resistive material.

8. Input device according to any one of claims 1 to 7, wherein said first and second electrode structures have an elongated rectilinear form.

9. Input device according to any one of claims 1 to 7, wherein said first and second electrode structures are in the form of matching ring segments.

10. Input device according to any one of claims 1 to 9, wherein said resistive material is a pressure sensitive material, such that the electrical resistance of the electrical contact established between adjacent finger electrodes is depending on the pressure acting on the input device.

11. Input device according to any one of claims 1 to 10, wherein said first and second carrier layers are arranged at a certain distance by means of a spacer layer, said spacer layer comprising at least one cut-out in the region of an active area of the data input device.
